# EUROPÄISCHE PATENTSCHRIFT

(11) **EP 2 596 970 B1**
(45) Veröffentlichungstag und Bekanntmachung des Hinweises auf die Patenterteilung: **29.07.2015**
(21) Anmeldenummer: 12007914.0
(22) Anmeldetag: 23.11.2012
(51) Int. Cl.: B60J 5/04

(54) **Fahrzeugkarosserie-Seitenstruktur**
Vehicle body side structure
Structure latérale de carrosserie de véhicule

(30) Priorität: 26.11.2011 DE 102011119539
(43) Veröffentlichungstag der Anmeldung: 29.05.2013
(73) Patentinhaber: Volkswagen Aktiengesellschaft, 38440 Wolfsburg (DE)
(72) Erfinder: Hanigk, Steffen, 38173 Sickte (DE); Rodermund, Wilfried, 38461 Danndorf (DE)

(56) Entgegenhaltungen:
- FR-A1- 2 859 137
- JP-A- 57 041 209
- JP-A- 2003 011 669

## Beschreibung

Die Erfindung betrifft eine Fahrzeugkarosserie-Seitenstruktur nach dem Oberbegriff des Patentanspruches 1.

Aus Komfortgründen ist die Einstiegsöffnung bei geöffneter Fahrzeugtür möglichst groß zu gestalten, um den Ein- oder Ausstieg der Fahrzeuginsassen oder das Be- und Entladen größerer Güter zu erleichtern.

Beispielhaft ist aus der DE 10 2010 000 334 A1 eine Fahrzeugkarosserie-Seitenstruktur bekannt, bei der die Vordertür an der A-Säule angelenkt ist und die Hintertür verschiebbar an der Fahrzeugkarosserie-Seitenstruktur geführt ist. Zur Vergrößerung der Einstiegsöffnung ist die üblicherweise zwischen der Vorder- und Hintertür vorgesehene B-Säule weggelassen. Die B-Säule dient im Seitenkollisionsfall zum Schutz des Fahrzeuginnenraums. Bei Weglassung der B-Säule besteht im Seitenkollisionsfall die Gefahr, dass die Vorder- und Hintertür im Fugenbereich auseinander gedrückt werden. Dadurch kann der Fahrzeuginnenraum seitlich geöffnet werden. Um dies zu vermeiden, sind daher anstelle der B-Säule Ersatzverstärkungen an den Fahrzeugtüren vorzusehen. Aus der DE 10 2009 044 698 A1 ist eine Türstruktur eines Fahrzeugs bekannt, die solche Verstärkungselemente zum Schutz vor einer Seitenkollision aufweisen.

Aus der FR 2 859 137 A1 ist eine gattungsgemäße Fahrzeugkarosserie-Seitenstruktur bekannt. Demzufolge ist ein Fahrzeug ohne B-Säule vorgesehen, wobei die vorderen und hinteren Seitentüren Verstärkungselemente zum Schutz vor einer Seitenkollision aufweisen. Im Seitenkollisionsfall können mittels der Verstärkungselemente Kraftkomponenten erzeugt werden, mit denen die Vorder- und Hintertür in der Fahrzeuglängsrichtung zwischen der A-Säule und der C-Säule des Fahrzeugs einspannbar sind.

Die Aufgabe der Erfindung besteht darin, eine Fahrzeugkarosserie-Seitenstruktur bereitzustellen, bei der der Fahrzeuginnenraum trotz Weglassung der B-Säule in einfacher Weise im Seitenkollisionsfall geschützt ist.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf dem Grundgedanken, dass die Verstärkungselemente der Vorder- und Hintertüren im Crashfall so zusammenwirken, dass sich eine selbststützende Türstruktur ergibt, die auch ohne B-Säule ein stabiles Widerlager gegen die Seitenkollisionskräfte bildet. Vor diesem Hintergrund weist die Fahrzeugkarosserie-Seitenstruktur gemäß dem kennzeichnenden Teil des Patentanspruches 1 ein Umlenkmittel auf, mit dem unter Beaufschlagung einer Seitenkollisionskraft Kraftkomponenten erzeugbar sind, mit denen die Vorder- und Hintertüren in der Fahrzeuglängsrichtung zwischen der A-Säule und der C-Säule des Fahrzeugs einspannbar sind. Erfindungsgemäß werden daher die Seitenkollisionskräfte mit dem Umlenkmittel in die in der Fahrzeuglängsrichtung wirkenden Kraftkomponenten aufgeteilt, die die Vorder- und Hintertüren gegen die A-Säule und die C-Säule des Fahrzeuges verspannen.

Das Umlenkmittel ist durch die beiden Verstärkungselemente gebildet, die einerseits in der Vordertür und andererseits in der Hintertür angeordnet sind. Die Verstärkungselemente können im Seitenkollisionsfall so zusammenwirken, dass die Vorder- und Hintertüren zwischen der A- und der B-Säule eingespannt werden. Erfindungsgemäß werden die beiden, das Umlenkmittel bildenden Verstärkungselemente im Seitenkollisionsfall so zueinander verlagert sowie gegeneinander abgestützt, dass sie die Vorder- und Hintertüren gegen die A- und C-Säulen des Fahrzeuges drücken.

Hierzu werden die Verstärkungselemente im Seitenkollisionsfall in eine vordefinierte Kollisionsstellung deformiert. Die Kollisionsstellung der Verstärkungselemente kann so gestaltet werden, dass sich die Verstärkungselemente unter Aufbau der in der Fahrzeuglängsrichtung wirkenden Kraftkomponenten mittelbar oder unmittelbar gegeneinander abstützen. In der vordefinierten Kollisionsstellung wird daher eine selbststützende Türstruktur bereitgestellt, die im Hinblick auf eine Seitenkollision besonders steif ist.

In einer Ausführungsform können eines oder mehrere der Verstärkungselemente des Umlenkmittels jeweils Bügelabschnitte aufweisen, die im Seitenkollisionsfall mit zueinander gegenläufigen Schwenkbewegungen in die Kollisionsstellung verschwenkbar sind.

Die, das Umlenkmittel bildenden Verstärkungselemente können dabei unmittelbar an einander zugewandten Seitenwangen der Vorder- und Hintertüren angeordnet sein, die in der Konstruktionslage über eine Verbindungsfuge voneinander beabstandet sind. Die Verstärkungselemente können insbesondere innenseitig zwischen dem Innen- und dem Außenblechteil der jeweiligen Fahrzeugtüren angeordnet sein.

Eine zuverlässige Einleitung der Seitenkollisionskräfte in den Dachrahmen-Längsträger und in den türschwellerseitigen Fahrzeug-Längsträger ist von großer Bedeutung für die Crashsicherheit. Die beiden Verstärkungselemente können daher bevorzugt in der Fahrzeughochrichtung langgestreckte Profilteile, insbesondere Stahlprofilteile, sein. Diese können sich insbesondere zwischen dem oberen und unteren Türrand der Fahrzeugtüren erstrecken. Die Enden der Stahlprofilteile können über steife Anbindungspunkte mit der jeweiligen Fahrzeugtür verbunden sein.

Im Seitenkollisionsfall können diese oberen und unteren steifen Anbindungspunkte der Verstärkungselemente vertikal ausgerichtete Schwenkachsen definieren, um die herum die Bügelabschnitte in zueinander gegenläufiger Schwenkbewegung nach innen einschwenkbar sind. Beim Einschwenken nach innen werden die Bügelabschnitte so lange aufeinander zu verlagert, bis diese sich mittelbar oder unmittelbar gegeneinander abstützen können. Im weiteren Kollisionsverlauf werden dann die Seitenkollisionskräfte über die Bügelabschnitte bis zu den Anbindungspunkten und von dort weiter in den Fahrzeug-Längsträger und in den Dachrahmen-Längsträger eingeleitet. Die Vorder- und Hintertüren werden dadurch unter Beaufschlagung der Kraftkomponenten zur A-Säule und zur C-Säule gedrückt. Dadurch ergibt sich ein besonders steifes Widerlager, das als Ersatz für die B-Säule den Fahrzeuginnenraum vor Seitenkollision schützt.

Um eine Schwenkbewegung der Bügelabschnitte zu gewährleisten, sind die Bügelabschnitte der Verstärkungselemente in der Fahrzeuglängsrichtung einander zugewandt ausgewölbt. Zudem sind die Bügelabschnitte in der Fahrzeugquerrichtung um einen Querversatz nach außen ausgebaucht.

In Seitenansicht betrachtet ergibt sich daher eine X-förmige Struktur des Umlenkmittels, bei der die beiden Bügelabschnitte der Verstärkungselemente in etwa auf mittlerer Fahrzeughöhe an einander zugewandten Scheitelpunkten ggf. spiegelsymmetrisch zusammenlaufen.

Die Erfindung und ihre vorteilhafte Aus- und/oder Weiterbildungen sowie deren Vorteile werden nachfolgend anhand von Zeichnungen näher erläutert.

Es zeigen:
- Fig. 1: in einer Seitenansicht eine Fahrzeugkarosserie-Seitenstruktur mit angedeuteten Vorder- und Hintertüren;
- Fig. 2: eine Schnittdarstellung entlang der Schnittebene I-I aus der Fig. 1;
- Fig. 3: eine Schnittdarstellung entlang der Schnittebene II-II aus der Fig. 1;
- Fig. 4: in perspektivischer Ansicht eine Prinzipdarstellung zur Veranschaulichung der Funktionsweise des erfindungsgemäßen Umlenkmittels.

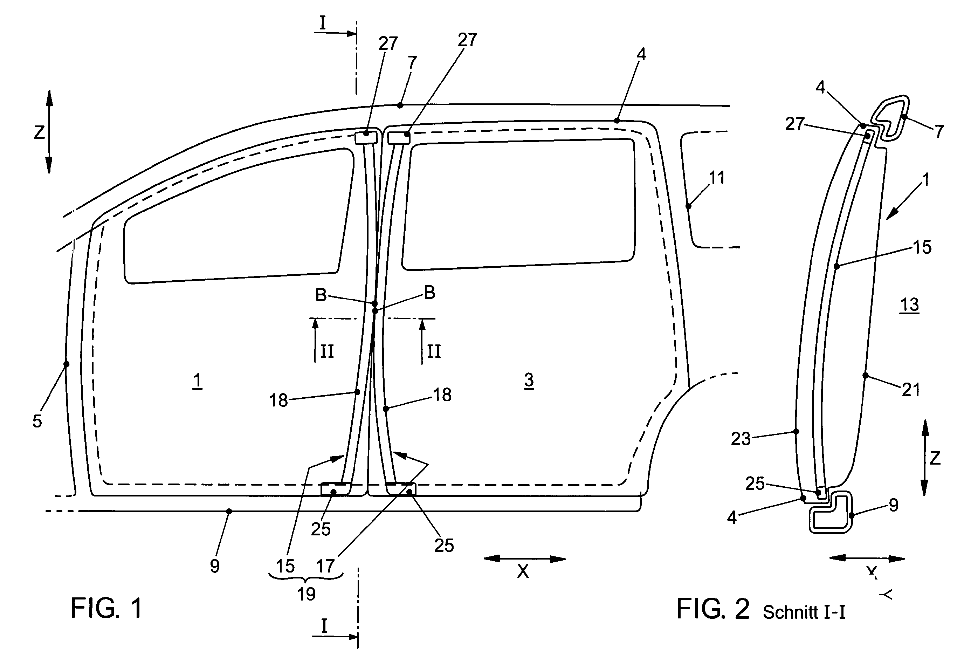

In der Fig. 1 ist grob schematisch eine Fahrzeugkarosserie-Seitenstruktur mit einer Vordertür 1 und einer Hintertür 3 gezeigt, die an einer schmalen Verbindungsfuge 32 ineinander übergehen. Die in der Fig. 1 dargestellte Seitenstruktur ist im Rohbauzustand gezeigt, so dass von der Vorder- und der Hintertür 1, 3 lediglich das Innenblechteil dargestellt ist. Von der Seitenstruktur der Karosserie ist in der Fig. 1 der Dachrahmen-Längsträger 7 dargestellt, der in der Fahrzeuglängsrichtung x nach vorne in die A-Säule 5 übergeht. Die beiden Fahrzeugtüren 1, 3 sind unterseitig von einem türschwellerseitigen Fahrzeug-Längsträger 9 begrenzt, der zusammen mit dem Dachrahmen-Längsträger 7 in die hintere C-Säule 11 übergeht.

In der Fig. 1 ist die Vordertür 1 an der vorderen A-Säule 5 angelenkt, während die Hintertür 3 über einen nicht dargestellten Gelenk- und Schiebemechanismus entlang der Fahrzeuglängsrichtung x verschiebbar geführt ist. In der, in der Fig. 1 angedeuteten geschlossenen Türstellung sind die beiden Türen 1, 3 mit ihren Randabschnitten 4 jeweils in Anlage mit dem Dachrahmen-Längsträger 7 und mit dem türschwellerseitigen Längsträger 9, wie es in der Fig. 2 beispielhaft anhand der Vordertür 1 dargestellt ist.

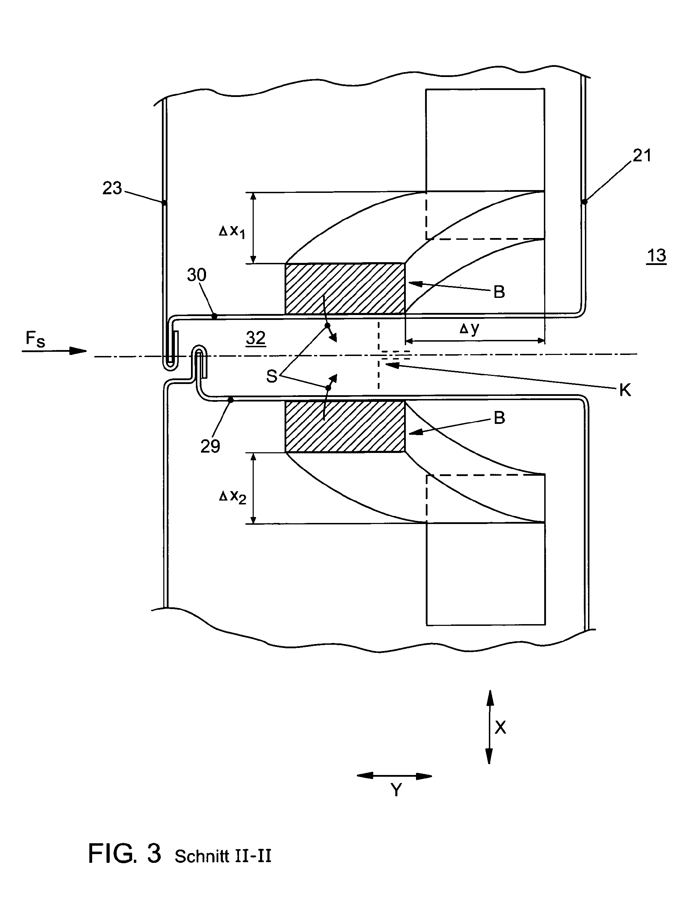

Um einen möglichst großen Ein- und Ausstiegsbereich zu erreichen, ist in der, in der Fig. 1 gezeigten Seitenstruktur der Fahrzeugkarosserie eine üblicherweise der Vorder- und Hintertür 1, 3 zwischengeordnete B-Säule weggelassen. Dadurch ergibt sich ein Einstiegsbereich, der sich bei geöffneten Fahrzeugtüren 1, 3 durchgängig von der A-Säule 5 bis zur hinteren C-Säule 11 erstreckt. Zum Schutz des Fahrzeuginnenraums 13 sind in den Vorder- und Hintertüren 1, 3 jeweils Verstärkungselemente 15, 17 integriert. Die beiden Verstärkungselemente 15, 17 bilden im Seitenkollisionsfall gemeinsam ein Umlenkelement 19. Mit dem so gebildeten Umlenkmittel 19 können in später beschriebener Weise die beim Seitencrash auf das Fahrzeug einwirkenden Seitenkollisionskräfte Fₛ zur Aussteifung der Seitenstruktur genutzt werden. Durch Beaufschlagung der Seitenkollisionskräfte Fₛ werden die Verstärkungselemente 15, 17 in eine Kollisionsstellung K (Fig. 3) verbracht, in der sich die beiden Verstärkungselemente 15, 17 unter Aufbau von Kraftkomponenten Fₓ gegeneinander abstützen. Dadurch wird der Fahrzeuginnenraum 13 geschlossen gehalten und gleichzeitig ein im Bereich des Kollisionsorts befindliches Schließsystem der beiden Fahrzeugtüren 1, 3 entlastet.

Die beiden, das Umlenkmittel 19 bildenden Verstärkungselemente 15, 17 sind beispielhaft in der Fahrzeughochrichtung z langgestreckte Profilteile, etwa Stahlprofilteile, die innerhalb der Fahrzeugtüren 1, 3 zwischen dem jeweiligen Innenblechteil 21 und dem Außenblechteil 23 angeordnet sind. Die Stahlprofilteile sind dabei unmittelbar an den einander zugewandten Seitenwangen 29, 30 der Fahrzeugtüren 1, 3 angeordnet, die über die Verbindungsfuge 32 voneinander beabstandet sind. Die Verstärkungselemente 15, 17 weisen zudem jeweils an ihren oberen und unteren Enden Anbindungspunkte 25, 27 auf, an denen die Verstärkungselemente 15, 17 steif an dem oberen und unteren Türrand 4 der Fahrzeugtüren 1, 3 angebunden sind.

Wie aus den Figuren hervorgeht, weisen die Verstärkungselemente 15, 17 zudem Bügelabschnitte 22 auf, die sich zwischen den oberen und unteren Anbindungspunkten 25, 27 erstrecken. Die Bügelabschnitte 22 sind in der Fahrzeuglängsrichtung x einander zugewandt ausgewölbt. Entsprechend sind die Bügelabschnitte 22 ausgehend von den Anbindungspunkten 25, 27 jeweils um Längsversätze Δx₁, Δx₂ aufeinander zu gewölbt, und zwar so, dass die beiden Bügelabschnitte 18 in etwa auf mittlerer Fahrzeughöhe an Scheitelpunkten B zusammenlaufen, die lediglich geringfügig voneinander beabstandet sind. Zudem sind die ausgewölbten Bügelabschnitte 22 der Verstärkungselemente 15, 17 ausgehend von den Anbindungspunkten 25, 27 um einen Querversatz Δy in der Fahrzeugquerrichtung y nach außen ausgebaucht. In der Seitenansicht ergeben daher die Bügelabschnitte 22 eine in etwa X-förmige Geometrie des Umlenkmittels 19.

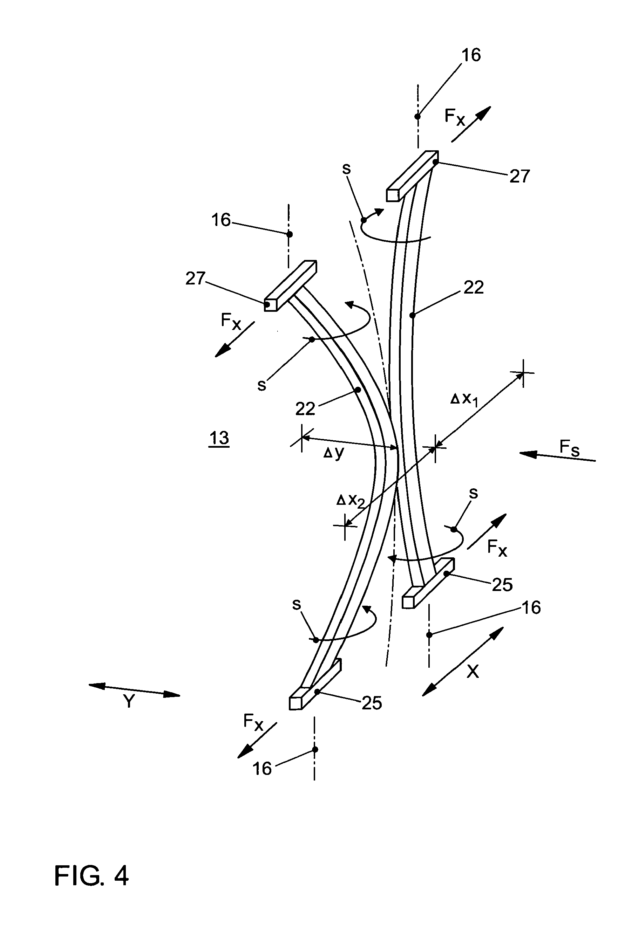

Bei einer Seitenkollision ergibt sich daher der folgende Crashverlauf: Durch Einwirken der in der Fig. 3 und 4 gezeigten Seitenkollisionskräfte Fs werden die beiden Bügelabschnitte 22 der Verstärkungselemente 15, 17 zueinander gegenläufig mit angedeuteten Schwenkbewegungen S (Fig. 3 und 4) in eine in der Fig. 3 angedeutete Kollisionsstellung K verschwenkt. Die oberen und unteren Anbindungspunkte 25, 27 bilden dabei Schwenkachsen 16, um die herum die Bügelabschnitte 22 in gegenläufigen Schwenkbewegungen B nach innen einschwenkbar sind. Durch das gegenläufige Einschwenken werden die beiden Bügelabschnitte 22 an ihren Scheitelpunkten B aufeinander zu verlagert, bis sich die beiden Bügelabschnitte 22 in der in der Fig. 3 angedeuteten Kollisionsstellung K gegeneinander abstützen (Fig. 3). Somit ergibt sich ein Kraftpfad, mit dem die Seitenkollisionskräfte Fs an den Bügelabschnitten 22 der Verstärkungselemente 15, 17 in der Fahrzeuglängsrichtung x umgelenkt werden und die Kraftkomponenten Fx an den steifen Anbindungspunkten 25, 27 in den Fahrzeug-Längsträger 9 und in den Dachrahmen-Längsträger 7 eingeleitet werden. Durch die Seitenkollision ergibt sich also eine selbststützende Türstruktur, bei der die Vorder- und Hintertüren 1, 3 mit Hilfe der Kraftkomponenten Fₓ gegen die A- und C-Säulen 5, 11 verspannt sind.

## Patentansprüche

1. Fahrzeugkarosserie-Seitenstruktur mit zumindest zwei in der Fahrzeuglängsrichtung (x) hintereinander angeordneten Vorder- und Hintertüren (1, 3), die unter Weglassung einer zwischengeordneten Fahrzeugsäule, insbesondere einer B-Säule, jeweils zumindest ein Verstärkungselement (15, 17) zum Schutz vor einer Seitenkollision aufweisen, wobei die Fahrzeugkarosserie-Seitenstruktur ein Umlenkmittel (19) aufweist, mit dem unter Beaufschlagung einer Seitenkollisionskraft (Fₛ) Kraftkomponenten (Fₓ) erzeugbar sind, mit denen die Vorder- und Hintertüren (1, 3) in der Fahrzeuglängsrichtung (x) zwischen der A-Säule (5) und der C-Säule (11) des Fahrzeugs einspannbar sind, **dadurch gekennzeichnet, dass** das Umlenkmittel (19) durch die beiden Verstärkungselemente (15, 17) der Vorder- und der Hintertür (1, 3) gebildet ist, und zwar so, dass die Verstärkungselemente in der Fahrzeuglängsrichtung (x) einander zugewandt ausgewölbt sind und in der Fahrzeugquerrichtung (y) um einen Querversatz (Δy) nach außen ausgebaucht sind.

2. Fahrzeugkarosserie-Seitenstruktur nach Anspruch 1, **dadurch gekennzeichnet, dass** die Verstärkungselemente (15, 17) im Seitenkollisionsfall so zusammenwirken, dass die Vorder- und Hintertüren (1, 3) zwischen der A- und der C-Säule (5, 11) eingespannt sind.

3. Fahrzeugkarosserie-Seitenstruktur nach Anspruch 2, **dadurch gekennzeichnet, dass** die Verstärkungselemente (15, 17) im Seitenkollisionsfall in eine Kollisionsstellung (K) deformierbar sind, in der sich die beiden Verstärkungselemente (15, 17) unter Aufbau der Kraftkomponenten (Fₓ) mittelbar oder unmittelbar gegeneinander abstützen.

4. Fahrzeugkarosserie-Seitenstruktur nach Anspruch 3, **dadurch gekennzeichnet, dass** die Verstärkungselemente (15, 17) jeweils Bügelabschnitte (22) aufweisen, die im Seitenkollisionsfall zueinander gegenläufig mit Schwenkbewegungen (S) in die Kollisionsstellung (K) verschenkbar sind.

5. Fahrzeugkarosserie-Seitenstruktur nach Anspruch 2 oder 3, **dadurch gekennzeichnet, dass** die, das Umlenkmittel (19) bildenden Verstärkungselemente (15, 17) an den einander zugewandten Seitenwangen (29, 30) der Vorder- und Hintertüren (1, 3) angeordnet sind, insbesondere innenseitig zwischen dem Innen- und dem Außenblechteil (21, 23) der jeweiligen Fahrzeugtür (1, 3).

6. Fahrzeugkarosserie-Seitenstruktur nach einem der vorhergehenden Ansprüche, **dadurch gekennzeichnet, dass** die beiden Verstärkungselemente (15, 17) in der Fahrzeughochrichtung (z) langgestreckte Profilteile, insbesondere Stahlprofilteile, sind, die sich zwischen dem oberen und unteren Türrand (4) der Fahrzeugtüren (1, 3) erstrecken.

7. Fahrzeugkarosserie-Seitenstruktur nach Anspruch 4, **dadurch gekennzeichnet, dass** die Bügelabschnitte (22) der Verstärkungselemente (15, 17) über steife Anbindungspunkte (25, 27) mit der jeweiligen Fahrzeugtür (1, 3) verbunden ist.

8. Fahrzeugkarosserie-Seitenstruktur nach Anspruch 7, **dadurch gekennzeichnet, dass** die die steife Anbindungspunkte (25, 27) der Verstärkungselemente (15, 17) im Seitenkollisionsfall jeweils Schwenkachsen (16) definieren, um die herum die Bügelabschnitte (22) in gegenläufiger Schwenkbewegung (S) nach innen einschwenkbar sind, und zwar unter Aufbau der in der Längsrichtung (x) wirkenden Kraftkomponenten (Fₓ).

9. Fahrzeugkarosserie-Seitenstruktur nach einem der vorhergehenden Ansprüche, **dadurch gekennzeichnet, dass** die beiden Verstärkungselemente (15, 17) zueinander spiegelsymmetrisch angeordnet sind.

## Claims

1. Vehicle body side structure having at least two front and rear doors (1, 3) which are arranged behind one another in the vehicle longitudinal direction (x) and which, with the omission of an interposed vehicle pillar, in particular a B-pillar, in each case have at least one reinforcing element (15, 17) for protecting against a side collision, wherein the vehicle body side structure has a deflection means (19) by means of which force components (Fₓ) can be generated under the action of a side collision force (Fₛ), by means of which force components the front and rear doors (1, 3) can be clamped between the A-pillar (5) and the C-pillar (11) of the vehicle in the vehicle longitudinal direction (x), **characterized in that** the deflection means (19) is formed by the two reinforcing elements (15, 17) of the front and the rear door (1, 3), specifically in such a way that the reinforcing elements are arched so as to face one another in the vehicle longitudinal direction (x) and bulge outwardly in the vehicle transverse direction (y) by a transverse offset (Δy).

2. Vehicle body side structure according to Claim 1, **characterized in that**, in the event of a side collision, the reinforcing elements (15, 17) interact in such a way that the front and rear doors (1, 3) are clamped between the A- and the C- pillar (5, 11).

3. Vehicle body side structure according to Claim 2, **characterized in that**, in the event of a side collision, the reinforcing elements (15, 17) can be deformed into a collision position (K) in which the two reinforcing elements (15, 17) are supported directly or indirectly against one another with the build-up of the force components (Fₓ).

4. Vehicle body side structure according to Claim 3, **characterized in that** the reinforcing elements (15, 17) in each case have bow sections (22) which, in the event of a side collision, can be pivoted into the collision position (K) with pivoting movements (S) in an opposite direction to one another.

5. Vehicle body side structure according to Claim 2 or 3, **characterized in that** the reinforcing elements (15, 17) forming the deflection means (19) are arranged on the mutually facing side cheeks (29, 30) of the front and rear doors (1, 3), in particular on the inner side between the inner and the outer sheet metal part (21, 23) of the respective vehicle door (1, 3).

6. Vehicle body side structure according to one of the preceding claims, **characterized in that** the two reinforcing elements (15, 17) are profile parts, in particular steel profile parts, which are longitudinally extended in the vehicle vertical direction (z) and which extend between the upper and lower door edge (4) of the vehicle doors (1, 3).

7. Vehicle body side structure according to Claim 4, **characterized in that** the bow sections (22) of the reinforcing elements (15, 17) are connected to the respective vehicle door (1, 3) via rigid attachment points (25, 27).

8. Vehicle body side structure according to Claim 7, **characterized in that**, in the event of a side collision, the rigid attachment points (25, 27) of the reinforcing elements (15, 17) in each case define pivot axes (16) around which the bow sections (22) can be pivoted inwardly with an opposite pivoting movement (S), specifically with the build-up of the force components (Fₓ) acting in the longitudinal direction (x).

9. Vehicle body side structure according to one of the preceding claims, **characterized in that** the two reinforcing elements (15, 17) are arranged with mirror symmetry in relation to one another.

## Revendications

1. Structure latérale de carrosserie de véhicule comprenant au moins deux portes avant et arrière (1, 3) disposées l'une derrière l'autre dans la direction longitudinale du véhicule (x), qui, en omettant une colonne de véhicule disposée entre elles, en particulier une colonne B, présentent à chaque fois au moins un élément de renforcement (15, 17) pour la protection contre une collision latérale, la structure latérale de carrosserie de véhicule présentant un moyen de déviation (19) avec lequel des composantes de force (Fₓ) peuvent être générées par la sollicitation d'une force de collision latérale (Fₛ), avec lesquelles composantes de force les portes avant et arrière (1, 3) peuvent être serrées dans la direction longitudinale du véhicule (x) entre la colonne A (5) et la colonne C (11) du véhicule, **caractérisée en ce que** le moyen de déviation (19) est formé par les deux éléments de renforcement (15, 17) de la porte avant et de la porte arrière (1, 3) et ce de telle sorte que les éléments de renforcement soient cintrés vers l'extérieur de manière tournée l'un vers l'autre dans la direction longitudinale du véhicule (x) et soient bombés vers l'extérieur suivant un décalage transversal (Δy) dans la direction transversale du véhicule (y).

2. Structure latérale de carrosserie de véhicule selon la revendication 1, **caractérisée en ce que** les éléments de renforcement (15, 17) coopèrent en cas de collision latérale de telle sorte que les portes avant et arrière (1, 3) soient serrées entre la colonne A et la colonne C (5, 11).

3. Structure latérale de carrosserie de véhicule selon la revendication 2, **caractérisée en ce que** les éléments de renforcement (15, 17), en cas de collision latérale, peuvent être déformés dans une position de collision (K) dans laquelle les deux éléments de renforcement (15, 17) s'appuient directement ou indirectement l'un contre l'autre en créant les composantes de force (Fₓ).

4. Structure latérale de carrosserie de véhicule selon la revendication 3, **caractérisée en ce que** les éléments de renforcement (15, 17) présentent à chaque fois des portions en forme d'anse (22) qui, en cas de collision latérale, peuvent pivoter l'une par rapport à l'autre en sens inverse dans la position de collision (K) avec des mouvements de pivotement (S).

5. Structure latérale de carrosserie de véhicule selon la revendication 2 ou 3, **caractérisée en ce que** les éléments de renforcement (15, 17) formant le moyen de déviation (19) sont disposés au niveau des joues latérales tournées l'une vers l'autre (29, 30) des portes avant et arrière (1, 3), en particulier du côté interne entre la partie de tôle interne et la partie de tôle externe (21, 23) de la porte de véhicule respective (1, 3).

6. Structure latérale de carrosserie de véhicule selon l'une quelconque des revendications précédentes, **caractérisée en ce que** les deux éléments de renforcement (15, 17) sont des parties profilées allongées dans la direction verticale du véhicule (z), en particulier des parties profilées en acier, qui s'étendent entre le bord de porte supérieur et le bord de porte inférieur (4) des portes du véhicule (1, 3).

7. Structure latérale de carrosserie de véhicule selon la revendication 4, **caractérisée en ce que** les portions en forme d'anse (22) des éléments de renforcement (15, 17) sont connectées par le biais de points de liaison rigides (25, 27) à la porte de véhicule respective (1, 3).

8. Structure latérale de carrosserie de véhicule selon la revendication 7, **caractérisée en ce que** les points de liaison rigides (25, 27) des éléments de renforcement (15, 17) définissent à chaque fois en cas de collision latérale des axes de pivotement (16) autour desquels les portions en forme d'anse (22) peuvent pivoter vers l'intérieur suivant un mouvement de pivotement (S) en sens inverse l'une à l'autre, et ce en créant les composantes de force (Fₓ) agissant dans la direction longitudinale (x).

9. Structure latérale de carrosserie de véhicule selon l'une quelconque des revendications précédentes, **caractérisée en ce que** les deux éléments de renforcement (15, 17) sont disposés avec une symétrie spéculaire l'un par rapport à l'autre.
